# FASCICULE DE BREVET EUROPEEN

(11) **EP 2 534 614 B1**
(45) Date de publication et mention de la délivrance du brevet: **19.08.2015**
(21) Numéro de dépôt: 11708541.5
(22) Date de dépôt: 08.02.2011
(51) Int. Cl.: G06K 19/067, G08B 13/24

(54) **ETIQUETTE RFID PASSIVE SANS PUCE**
CHIPLOSES PASSIVES RFID-TAG
CHIPLESS PASSIVE RFID TAG

(30) Priorité: 11.02.2010 FR 1050971
(43) Date de publication de la demande: 19.12.2012
(73) Titulaire: Institut Polytechnique de Grenoble, 38000 Grenoble (FR); Université de Savoie, 73000 Chambery (FR)
(72) Inventeur: PERRET, Etienne, F-38031 Grenoble Cedex 1 (FR); TEDJINI, Smail, F-38031 Grenoble Cedex 1 (FR); VASUDEVAN NAIR, Deepu, F-38031 Grenoble Cedex 1 (FR); GARET, Frédéric, F-73160 Saint Cassin (FR); DUVILLARET, Lionel, F-73000 Chambéry (FR); VENA, Arnaud Maurice, F-07500 Guilherand-Granges (FR)
(74) Mandataire: Thibon, Laurent
(86) Numéro de dépôt international: PCT/FR2011/050264
(87) Numéro de publication internationale: WO 2011/098719

(56) Documents cités:
- EP-A1- 1 811 432
- US-A1- 2002 145 036

## Description

### Domaine de l'invention

La présente invention concerne une étiquette capable de stocker une information lisible à distance par une borne de lecture adaptée. L'invention vise plus particulièrement une technologie d'identification à distance par ondes électromagnétiques, couramment désignée dans la technique par le sigle RFID, de l'anglais "Radio Frequency Identification" - identification par fréquence radio. On considère ici plus particulièrement les dispositifs fonctionnant à des fréquences comprises entre 10 MHz et 10 THz.

### Exposé de l'art antérieur

Des systèmes d'échange de données en technologie RFID sont couramment utilisés pour reconnaître et/ou identifier, à faible ou moyenne distance, tous types d'objets porteurs d'une étiquette adaptée.

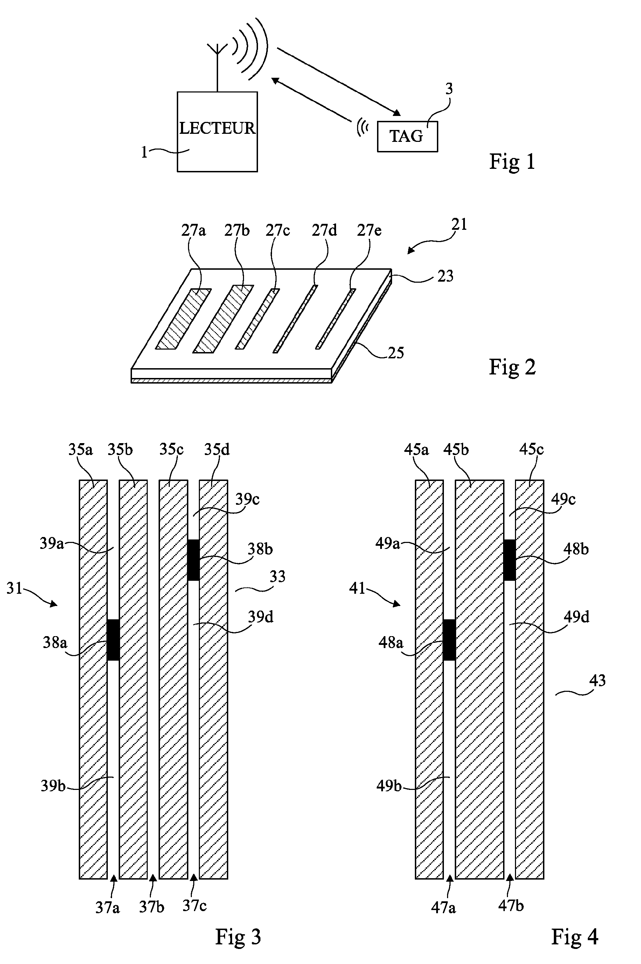

La figure 1 illustre de façon extrêmement schématique un système d'identification à distance en technologie RFID, comprenant une borne de lecture 1 et une étiquette d'identification (TAG) 3. La borne de lecture 1 comprend notamment une antenne, couplée à un dispositif d'émission-réception d'ondes radio. L'étiquette 3 contient une information d'identification et est capable, lorsqu'elle est placée à proximité de la borne de lecture, de recevoir le signal émis par la borne de lecture et d'interférer de façon spécifique avec ce signal selon son information d'identification. Cette interaction est détectée par la borne de lecture 1 qui peut en déduire l'information d'identification de l'étiquette.

Il existe principalement deux types d'étiquettes RFID, les étiquettes comprenant un circuit électronique intégré, dites étiquettes à puce, et les étiquettes ne comprenant pas de circuit électronique intégré, généralement désignées dans la technique par les termes anglais "chipless tags" - étiquettes sans puce, voir par exemple EP 1811432 ou US 2002/0145036. Ces documents divulguent des étiquettes comprenant une pluralité de bandes conductrices parallèles disjointes qui définissent des fréquences de résonance de l'étiquette.

Les étiquettes RFID à puce comprennent généralement une antenne, un circuit électronique, une mémoire pour stocker un code d'identification, et un transpondeur pour recevoir le signal émis par la borne de lecture et émettre en réponse, dans une bande de fréquences déterminée, un signal modulé contenant le code d'identification stocké dans la mémoire. Certaines étiquettes RFID à puce, dites actives, comprennent une batterie pour alimenter la puce. Dans d'autres étiquettes RFID à puce, dites passives, une partie de l'énergie portée par les ondes radio émises par la borne de lecture sert à alimenter électriquement la puce. Les étiquettes passives présentent l'avantage de ne pas nécessiter d'alimentation interne.

Du fait de la présence de circuits électroniques dans les étiquettes RFID à puce, ces étiquettes ont un coût de revient non négligeable. C'est notamment pour réduire ce coût de revient qu'on a proposé de réaliser des étiquettes sans puce. On s'intéresse ici aux étiquettes RFID sans puce.

La figure 2 est une vue en perspective représentant de façon schématique un exemple d'étiquette RFID sans puce 21. L'étiquette 21 est formée à partir d'un substrat diélectrique 23 ayant par exemple la forme d'une plaque rectangulaire de 18 x 35 mm et d'environ 1 mm d'épaisseur. La face arrière du substrat 23 est recouverte par un plan de masse métallique 25. Du côté de la face supérieure du substrat 23, sont formées des bandes conductrices parallèles disjointes, cinq bandes, 27a à 27e, dans cet exemple. Les bandes 27a à 27e différent les unes des autres par leurs dimensions (longueurs et/ou largeurs) et par leurs surfaces.

L'étiquette 21 constitue une structure à éléments résonants susceptible d'interférer avec un signal radio émis par une borne de lecture RFID (non représentée). Chaque bande conductrice 27a à 27e se comporte comme un circuit résonnant de type LC, capable de réémettre une onde électromagnétique spécifique qui peut alors être captée par la borne de lecture. L'inductance L dépend notamment de la longueur de la bande conductrice. La capacité C correspond à la capacité formée entre la bande conductrice et le plan de masse 25, et dépend notamment de la surface de la bande conductrice et de l'épaisseur du substrat ainsi que de ses propriétés diélectriques. Ainsi, chaque bande conductrice 27a à 27e détermine, par sa géométrie, une fréquence de résonance de l'étiquette 21. Dans cet exemple, chaque bande 27a à 27e définit une fréquence de résonance spécifique comprise entre 5 et 6 GHz.

En fonctionnement, la borne de lecture émet un signal radio dont le spectre inclut l'ensemble des fréquences de résonance des étiquettes qu'elle est susceptible de lire. Si l'étiquette 21 se trouve à proximité de la borne de lecture, la borne de lecture détecte un pic (et/ou un creux) du signal aux fréquences de résonance déterminées par les bandes 27a à 27e, ce qui se traduit par l'apparition de cinq raies distinctes, dans le spectre de puissance du signal radio. Les positions de ces cinq raies dans le spectre permettent à la borne de lecture d'identifier de façon unique l'étiquette 21.

Les étiquettes RFID sans puce sont par nature passives puisqu'elles ne nécessitent aucune alimentation électrique.

Bien que les étiquettes du type décrit en relation avec la figure 2 soient moins coûteuses à produire que les étiquettes à puce, leur prix de revient reste malgré tout non négligeable. Ceci est notamment lié au fait que le substrat de support utilisé pour réaliser l'étiquette doit comprendre un plan de masse, et avoir une épaisseur précise et des propriétés diélectriques bien définies.

Il serait souhaitable de pouvoir disposer d'étiquettes à très faible prix de revient, pouvant notamment être utilisées comme dispositifs d'identification jetables, par exemple dans des emballages de produits alimentaires.

En outre, la capacité de stockage d'information par unité de surface des étiquettes sans puce du type décrit en relation avec la figure 2 est relativement faible. Dans l'exemple de la figure 2, une étiquette de 18 x 35 mm, fonctionnant à des fréquences de l'ordre de 5 à 6 GHz, ne permet de stocker qu'un code de cinq bits. On notera qu'en augmentant la plage des fréquences de fonctionnement, on peut réduire la dimension des étiquettes. Il serait toutefois souhaitable de pouvoir disposer d'étiquettes RFID sans puce présentant une plus grande capacité de stockage par unité de surface, pour une plage de fréquences de fonctionnement donnée.

### Résumé

Ainsi, un objet d'un mode de réalisation de la présente invention est de proposer une étiquette RFID sans puce palliant au moins en partie certains des inconvénients des étiquettes RFID sans puce classiques.

Un objet d'un mode de réalisation de la présente invention est de prévoir une telle étiquette moins coûteuse et plus facile à produire que les étiquettes RFID sans puce classiques.

Un objet d'un mode de réalisation de la présente invention est de prévoir une telle étiquette pouvant être réalisée aisément sur tout type de support, par exemple par simple impression ou sérigraphie de pistes conductrices sur une seule face d'un emballage quelconque (par exemple en carton ou en papier).

Un objet d'un mode de réalisation de la présente invention est de prévoir une telle étiquette permettant de stocker plus d'information par unité de surface que les étiquettes RFID sans puce classiques.

Ainsi, un mode de réalisation de la présente invention prévoit une étiquette RFID sans puce comprenant une pluralité de bandes conductrices parallèles disjointes formées sur un support diélectrique, dans laquelle des ponts conducteurs relient entre elles des bandes conductrices voisines, les ponts conducteurs délimitant, entre les bandes conductrices, des portions de bandes diélectriques de longueurs distinctes, chaque portion de bande diélectrique déterminant une fréquence de résonance de l'étiquette, l'ensemble des fréquences de résonance de l'étiquette définissant un code d'identification.

Selon un mode de réalisation de la présente invention, entre chaque couple de bandes conductrices voisines reliées entre elles par un pont conducteur, est disposée une bande diélectrique non court-circuitée par un pont conducteur.

Selon un mode de réalisation de la présente invention, toutes les bandes conductrices voisines sont reliées entre elles par des ponts conducteurs.

Selon un mode de réalisation de la présente invention, la largeur d'une bande conductrice comprise entre deux bandes diélectriques voisines est au moins égale à trois fois la largeur des bandes conductrices adjacentes.

Selon un mode de réalisation de la présente invention, les bandes conductrices sont, en vue de dessus, en forme de U.

Selon un mode de réalisation de la présente invention, les bandes conductrices ont, en vue de dessus, la forme de portions de cercles.

Selon un mode de réalisation de la présente invention, les bandes conductrices sont rectilignes, des paires de bandes voisines ayant la même longueur et des paires de bandes voisines étant de longueurs distinctes.

Selon un mode de réalisation de la présente invention, les portions de bandes diélectriques ont toutes la même largeur.

Un autre mode de réalisation de la présente invention prévoir un procédé de codage d'une information lisible par un émetteur-récepteur d'ondes électromagnétiques, comprenant les étapes suivantes : former une pluralité de bandes conductrices parallèles disjointes sur un support diélectrique ; former des ponts conducteurs reliant entre elles des bandes conductrices voisines, de façon que les ponts conducteurs délimitent, entre les bandes conductrices, des portions de bandes diélectriques de longueurs distinctes, chaque portion de bande diélectrique déterminant une fréquence de résonance ; et associer à chaque fréquence de résonance une partie de l'information.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1, précédemment décrite, illustre de façon extrêmement schématique un système d'identification à distance en technologie RFID ;
la figure 2, précédemment décrite, est une vue en perspective représentant de façon schématique une étiquette RFID sans puce ;
la figure 3 est une vue de dessus représentant de façon schématique un exemple d'un mode de réalisation d'une étiquette RFID sans puce ;
la figure 4 est une vue de dessus représentant de façon schématique un autre exemple de réalisation d'une étiquette RFID sans puce ;
la figure 5 est une vue de dessus représentant de façon schématique un autre exemple de réalisation d'une étiquette RFID sans puce ;
la figure 6 représente de façon schématique le spectre de puissance du signal électromagnétique vu par une borne de lecture en présence de l'étiquette de la figure 5 ;
la figure 7 est une vue de dessus représentant de façon schématique trois variantes de réalisation de l'étiquette de la figure 5 ;
la figure 8 représente de façon schématique la superposition des spectres de puissance de signal électromagnétique vus par une borne de lecture en présence de chacune des étiquettes de la figure 7 ;
la figure 9 représente de façon schématique un autre exemple de réalisation d'une étiquette RFID sans puce ; et
la figure 10 représente de façon schématique un autre exemple de réalisation d'une étiquette RFID sans puce.

### Description détaillée

Par souci de clarté, de mêmes éléments ont été désignés par de mêmes références aux différentes figures et, de plus, les diverses figures ne sont pas tracées à l'échelle.

La figure 3 est une vue de dessus représentant de façon schématique un exemple de réalisation d'une étiquette RFID sans puce 31. L'étiquette 31 est formée sur un support diélectrique 33 et porte des motifs conducteurs sur une seule de ses deux faces. Sur cette face, sont formées quatre bandes conductrices rectilignes parallèles disjointes 35a à 35d. Les bandes 35a à 35d sont identiques, alignées selon une direction orthogonale aux bandes, et espacées les unes des autres d'un même pas. Ainsi, les bandes conductrices 35a à 35d délimitent trois bandes diélectriques rectilignes identiques 37a à 37c. Des ponts conducteurs relient entre elles des bandes conductrices voisines de façon à délimiter, entre les bandes conductrices, des portions de bandes diélectriques de longueurs distinctes. Dans cet exemple, deux ponts conducteurs 38a et 38b relient respectivement entre elles les bandes conductrices voisines de gauche 35a et 35b et les bandes conductrices voisines de droite 35c et 35d. Ainsi, chacune des bandes diélectriques de gauche 37a et de droite 37c, est divisée en deux portions de bandes diélectriques. L'étiquette comprend donc quatre portions de bandes diélectriques de longueurs distinctes 39a à 39d. La bande diélectrique centrale 37b n'est pas court-circuitée par un pont conducteur.

L'étiquette 31 constitue une structure à éléments résonants susceptible d'interférer avec un signal électromagnétique émis par une borne de lecture RFID (non représentée). Chaque portion de bande diélectrique 39a à 39d est entourée en grande partie par un chemin conducteur en forme de U. Ainsi, chaque portion de bande diélectrique 39a à 39d définit un circuit résonant de type LC, capable de réémettre une onde électromagnétique spécifique qui peut alors être captée par la borne de lecture. L'inductance L dépend notamment de la longueur du chemin conducteur en U, et donc de la longueur de la portion de bande diélectrique. Les deux branches parallèles du chemin conducteur en U, séparées par la portion de bande diélectrique, forment la capacité C. Ainsi, chaque portion de bande diélectrique 39a à 39d détermine, par sa longueur, une fréquence de résonance de l'étiquette 31. L'ensemble des fréquences de résonance de l'étiquette définit un code d'identification. L'identifiant de l'étiquette est donc notamment déterminé par la longueur et/ou la position des ponts conducteurs 38a et 38b.

Selon un exemple de procédé de réalisation d'étiquettes RFID, on pourra former, à grande échelle, des étiquettes comprenant le motif de base constitué par les bandes conductrices parallèles, et laisser à l'utilisateur final la possibilité de former lui-même les ponts conducteurs, par exemple par impression avec une encre conductrice. Un avantage d'un tel procédé est qu'il permet à l'utilisateur final de personnaliser les identifiants de ses étiquettes.

La bande diélectrique centrale 37b, non court-circuitée par un pont conducteur, a pour rôle d'éviter des phénomènes parasites de couplage entre les régions résonantes de l'étiquette. Ainsi, une modification de longueur d'une portion de bande diélectrique entraîne une modification de la fréquence de résonance liée à cette portion de bande, mais n'influe pas sur les fréquences de résonance liées aux autres portions de bandes.

La figure 4 est une vue de dessus représentant de façon schématique un autre exemple de réalisation d'une étiquette RFID sans puce 41. L'étiquette 41 est formée sur un support diélectrique 43. Du côté d'une face du support 43, sont formées trois bandes conductrices rectilignes parallèles disjointes 45a à 45c. Les bandes 45a à 45c sont espacées les unes des autres d'un même pas. Ainsi, les bandes conductrices 45a à 45c délimitent deux bandes diélectriques rectilignes identiques 47a et 47b. Des ponts conducteurs relient entre elles les bandes conductrices voisines de façon à délimiter, entre les bandes conductrices, des portions de bandes diélectriques de longueurs distinctes. Dans cet exemple, deux ponts conducteurs 48a et 48b relient respectivement entre elles les bandes conductrices voisines 45a et 45b et les bandes conductrices voisines 45b et 45c. Ainsi, chacune des bandes diélectriques 47a et 47b se trouve divisée en deux portions de bandes diélectriques de longueurs distinctes. L'étiquette comprend donc quatre portions de bandes diélectriques de longueurs distinctes 49a à 49d. A la différence de l'étiquette 31 de la figure 3, l'étiquette 41 ne comprend pas de bande diélectrique centrale non court-circuitée par un pont conducteur. La bande conductrice centrale 45b est prévue d'une largeur suffisante pour éviter des phénomènes parasites de couplage entre les fentes résonantes de l'étiquette. A titre d'exemple, la bande centrale 45b a une largeur au moins égale à trois fois la largeur des bandes latérales 45a, 45c.

Un avantage des étiquettes RFID du type décrit en relation avec les figures 3 et 4 est qu'elles sont plus faciles à produire que les étiquettes du type décrit en relation avec la figure 2. En effet, à la différence de l'étiquette 21 de la figure 2, les étiquettes 31 et 41 des figures 3 et 4 ne comprennent pas de plan de masse. Les étiquettes 31 et 41 peuvent être formées, par dépôt ou par impression avec une encre conductrice, sur une seule face d'un support diélectrique quelconque. On pourra notamment former des étiquettes directement sur les objets que l'on souhaite marquer, par exemple sur des emballages de produits alimentaires.

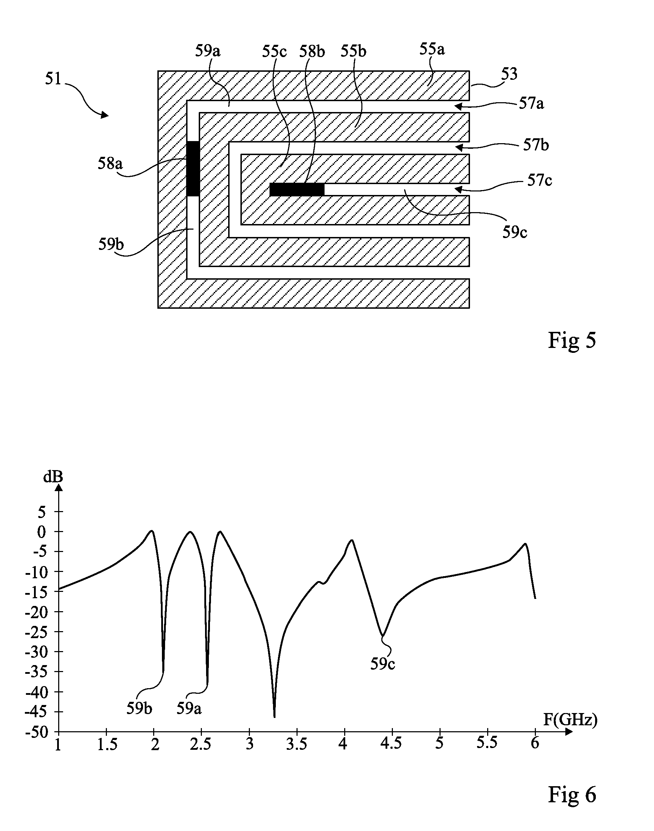

La figure 5 est une vue de dessus représentant de façon schématique une variante de réalisation préférée d'une étiquette RFID sans puce 51. L'étiquette 51 est formée sur un support diélectrique 53. Du côté d'une face du support 53, sont formées des bandes conductrices parallèles disjointes en forme de U imbriqués. Dans cet exemple, l'étiquette comprend trois bandes conductrices 55a à 55c, les bandes 55a et 55c étant respectivement la bande extérieure et la bande intérieure du motif. Les bandes sont espacées les unes des autres d'un même pas. Les deux branches parallèles du U formé par la bande intérieure 55c sont espacées d'une distance égale au pas séparant les bandes 55a à 55c les unes des autres. Ainsi, les bandes conductrices 55a à 55c délimitent deux bandes diélectriques en U, 57a et 57b, et une bande diélectrique rectiligne 57c, entre les branches parallèles du U formé par la bande 55c. Des ponts conducteurs 58a et 58b sont formés sur les bandes diélectriques extérieure 57a et intérieure 57c, délimitant trois portions de bandes diélectriques 59a à 59c de longueurs distinctes. Pour éviter des phénomènes parasites de couplage entre les régions résonantes de l'étiquette, la bande diélectrique centrale 57b n'est pas court-circuitée par un pont conducteur.

L'étiquette 51 constitue une structure à éléments résonants susceptible d'interférer avec un signal électromagnétique émis par une borne de lecture RFID (non représentée). Comme dans le cas des étiquettes RFID décrites en relation avec les figures 3 et 4, chaque portion de bande diélectrique 59a à 59c détermine, par sa longueur, une fréquence de résonance de l'étiquette. L'ensemble des fréquences de résonance de l'étiquette définit un code d'identification.

La figure 6 représente de façon schématique le spectre du signal électromagnétique vu par une borne de lecture en présence de l'étiquette 51 de la figure 5. Le spectre comprend trois raies 59a à 59c, respectivement à des fréquences de l'ordre de 2,6 GHz, 2,2 GHz, et 4,4 GHz, correspondant respectivement aux fréquences de résonance liées aux portions de bandes diélectriques de mêmes références. Plus la longueur d'une portion de bande diélectrique est faible, plus la fréquence de résonance associée est élevée. La borne de lecture peut détecter la présence des raies dans le spectre du signal et déterminer le code d'identification de l'étiquette. On notera que les pics du spectre peuvent également être utilisés pour le codage de l'identifiant associé à l'étiquette.

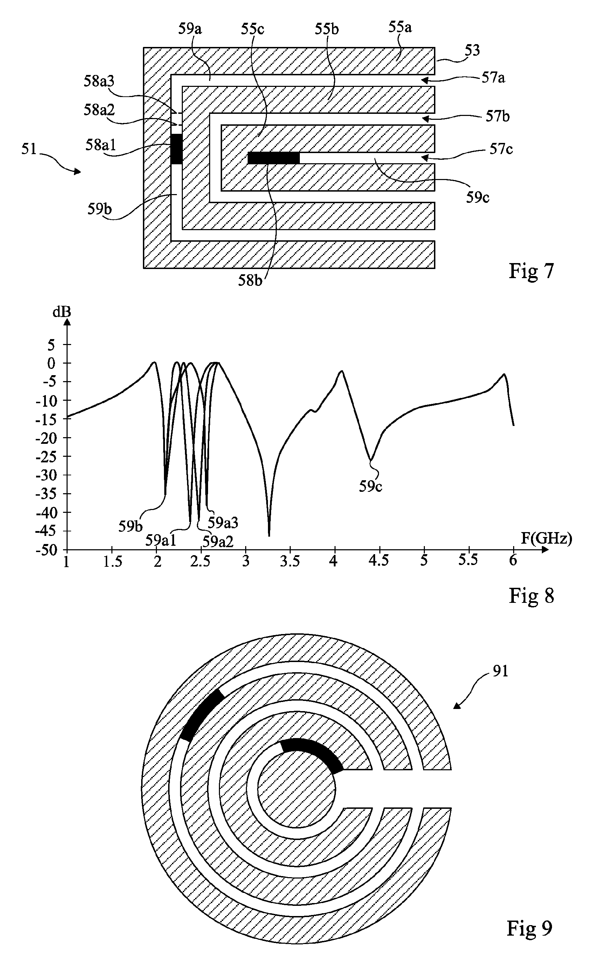

La figure 7, sensiblement identique à la figure 5, représente de façon schématique l'étiquette 51 pour trois codes d'identification distincts. Les trois codes se traduisent par trois longueurs distinctes 58a1, 58a2, 58a3 du pont conducteur 58a, affectant la longueur de la portion de bande diélectrique 59a, comme cela est représenté par des traits en pointillés sur la figure. Les portions de bandes diélectriques 59b et 59c sont de mêmes longueurs pour les trois codes.

La figure 8 représente de façon schématique la superposition des spectres de puissance de signal électromagnétique vus par une borne de lecture en présence de chacun des exemplaires d'étiquette de la figure 7. Lorsque la longueur de la portion de bande diélectrique 59a varie, la position de la raie 59a correspondante dans le spectre varie aussi. La superposition des spectres comprend donc trois raies distinctes 59a1, 59a2, et 59a3, correspondant aux trois longueurs distinctes de la portion de bande diélectrique 59a. Selon un avantage de la présente invention, une modification de longueur de l'une des portions de bande diélectrique n'influe pas sur les fréquences de résonance associées aux autres portions de bande diélectrique. En effet, la superposition des spectres comprend une unique raie 59b correspondant à la fréquence de résonance liée à la portion de bande diélectrique 59b et une unique raie 59c correspondant à la fréquence de résonance liée à la portion de bande diélectrique 59c. Comme évoqué ci-dessus, les pics du spectre peuvent également être utilisés pour le codage de l'identifiant associé à l'étiquette.

On pourra prévoir d'associer à chaque portion de bande diélectrique un ou plusieurs bits d'un code d'identification. A titre d'exemple, dans le cas de l'étiquette 51 (figures 5 et 7), on peut prévoir d'associer trois bits d'un code d'identification à chaque portion de bande diélectrique 59a à 59c. Chaque portion 59a à 59c pourra alors prendre l'une de huit longueurs distinctes correspondant à huit fréquences de résonance distinctes. On veillera bien entendu à ce qu'il n'y ait pas de recouvrement entre des plages de fréquences de résonance associées à des portions de bandes diélectriques distinctes.

La figure 9 représente de façon schématique une autre variante de réalisation d'une étiquette RFID sans puce 91. L'étiquette 91 est similaire à l'étiquette 51 de la figure 5, à la différence que les bandes conductrices parallèles ont la forme de portions de cercles imbriquées. Le principe de fonctionnement de l'étiquette est sensiblement le même que celui de l'étiquette 51.

Un avantage des étiquettes RFID sans puce en U et en portions de cercles, du type décrit en relation avec les figures 5 et 9, est qu'elles permettent de stocker une plus grande quantité d'information par unité de surface que les étiquettes du type décrit en relation avec la figure 2. A titre d'exemple, l'étiquette 51 de la figure 5 permet de stocker un code d'identification de neuf bits (trois bits par portion de bande diélectrique) sur une surface rectangulaire de 17,5 x 15 mm, pour une plage de fréquences de fonctionnement comprise entre 2 et 5 GHz. La surface de l'étiquette pourra être fortement réduite en utilisant des fréquences d'identification plus élevées.

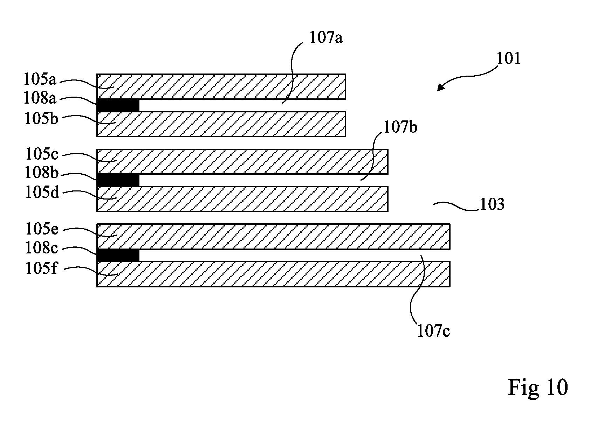

La figure 10 est une vue de dessus représentant de façon schématique une autre variante de réalisation d'une étiquette RFID sans puce 101. L'étiquette 101 est formée sur un support diélectrique 103. Du côté d'une face du support 103, sont formées des bandes conductrices rectilignes parallèles et disjointes 105a à 105f. Les bandes 105a à 105f sont de même largeur et espacées les unes des autres d'un même pas. Des paires de bandes voisines ont la même longueur. Dans l'exemple représenté, les bandes voisines 105a et 105b ont une première longueur, les bandes voisines suivantes 105c et 105d ont une deuxième longueur supérieure à la première longueur, et les bandes voisines suivantes 105e et 105f ont une troisième longueur supérieure à la deuxième longueur. Ainsi, les bandes conductrices 105a à 105d délimitent trois bandes diélectriques rectilignes de longueurs distinctes 107a à 107c, respectivement entre les bandes conductrices 105a et 105b, 105c et 105d, et 105e et 105f. Des ponts conducteurs 108a à 108c sont formés, chacun à une extrémité de l'une des bandes diélectriques 107a à 107c, reliant entre elles les bandes conductrices de même longueur. En fait, la configuration de la figure 10 est similaire à la configuration de la figure 3, à la différence que des bandes parallèles conductrices ont des longueurs distinctes, et que les ponts conducteurs sont formés à l'extrémité des bandes diélectriques. Chaque bande diélectrique définit un circuit résonant déterminant une fréquence de résonance de l'étiquette 101. L'ensemble des fréquences de résonance de l'étiquette définit un code d'identification.

On pourra prévoir d'associer à chaque bande diélectrique 107a à 107c un bit d'un code d'identification ou, comme dans l'exemple décrit en relation avec la figure 7, plusieurs bits d'un code d'identification.

Des modes de réalisation particuliers de la présente invention ont été décrits. Diverses variantes et modifications apparaîtront à l'homme de l'art.

En particulier, on a décrit ci-dessus, en relation avec les figures 3, 4, 5, 9 et 10, des motifs d'étiquettes RFID sans puce comprenant trois ou quatre bandes conductrices parallèles. L'invention ne se restreint pas à ces exemples particuliers. On pourra notamment prévoir des motifs comprenant un nombre de bandes conductrices plus élevé.

En outre, on a mentionné la possibilité d'associer trois bits d'un code d'identification à chaque portion de bande diélectrique. L'invention ne se restreint pas à ce cas particulier. On pourra notamment prévoir d'associer un plus grand nombre de bits à chaque portion de bande diélectrique. Toutefois, l'écart, dans le spectre du signal électromagnétique, entre deux raies de résonance correspondant à deux longueurs distinctes d'une même portion de bande diélectrique, s'en trouvera réduit. Il faudra donc prévoir une borne de lecture suffisamment sensible.

Par ailleurs, les étiquettes RFID 51, 91 et 101, décrites en relation avec les figures 5, 9 et 10, comprennent des bandes diélectriques non court-circuitées par des ponts conducteurs, pour éviter des phénomènes parasites de couplage entre les régions résonantes de l'étiquette. L'invention ne se restreint pas à ce cas particulier. On pourra prévoir d'utiliser toutes les bandes diélectriques pour le stockage du code d'identification, comme dans le cas de l'étiquette 41 de la figure 4. On veillera alors à prévoir une distance suffisante entre deux bandes diélectriques pour se prémunir des phénomènes parasites de couplage.

De plus, dans les étiquettes RFID sans puce décrites en relation avec les figures 3, 4, 5, 9 et 10, toutes les bandes diélectriques délimitées par des bandes conductrices parallèles sont de même largeur. L'invention ne se restreint pas à ce cas particulier. On pourra notamment avoir des bandes diélectriques de largeurs distinctes sur une même étiquette. De même, les bandes conductrices parallèles pourront être de largeurs distinctes.

En outre, bien que l'un des avantages des étiquettes RFID sans puce proposées ci-dessus réside dans la possibilité de se passer de tout plan de masse conducteur, on pourra aussi, pour certaines utilisations, notamment en environnement métallique, utiliser des motifs du type décrit en relation avec les figures 3, 4, 5, 9 et 10 en combinaison avec un plan de masse.

## Revendications

1. Étiquette RFID sans puce (31 ; 41 ; 51 ; 91) comprenant une pluralité de bandes conductrices parallèles disjointes (35 ; 45 ; 55) formées sur un support diélectrique (33 ; 43 ; 53), dans laquelle des ponts conducteurs (38 ; 48 ; 58) relient entre elles des bandes conductrices voisines, les ponts conducteurs délimitant, entre les bandes conductrices, des portions de bandes diélectriques (39 ; 49 ; 59) de longueurs distinctes, chaque portion de bande diélectrique déterminant une fréquence de résonance de l'étiquette, l'ensemble des fréquences de résonance de l'étiquette définissant un code d'identification.

2. Étiquette (31 ; 51 ; 91) selon la revendication 1, dans laquelle entre chaque couple de bandes conductrices voisines reliées entre elles par un pont conducteur, est disposée une bande diélectrique (37b ; 57b) non court-circuitée par un pont conducteur.

3. Étiquette (41) selon la revendication 1, dans laquelle toutes les bandes conductrices voisines sont reliées entre elles par des ponts conducteurs.

4. Étiquette (41) selon la revendication 3, dans laquelle la largeur d'une bande conductrice (45b) comprise entre deux bandes diélectriques voisines (47a, 47b) est au moins égale à trois fois la largeur des bandes conductrices (45a, 45c) adjacentes.

5. Étiquette (51) selon l'une quelconque des revendications 1 à 4, dans laquelle les bandes conductrices sont, en vue de dessus, en forme de U.

6. Étiquette (91) selon l'une quelconque des revendications 1 à 4, dans laquelle les bandes conductrices ont, en vue de dessus, la forme de portions de cercles.

7. Étiquette (101) selon l'une quelconque des revendications 1 à 4, dans laquelle les bandes conductrices sont rectilignes, des paires de bandes voisines (105a, 105b) ayant la même longueur et des bandes (105b, 105c) de paires différentes étant de longueurs distinctes.

8. Étiquette (31 ; 41 ; 51 ; 91) selon l'une quelconque des revendications 1 à 7, dans laquelle les portions de bandes diélectriques ont toutes la même largeur.

9. Procédé de codage d'une information lisible par un émetteur-récepteur d'ondes électromagnétiques, comprenant les étapes suivantes :
former une pluralité de bandes conductrices parallèles disjointes sur un support diélectrique ;
former des ponts conducteurs reliant entre elles des bandes conductrices voisines, de façon que les ponts conducteurs délimitent, entre les bandes conductrices, des portions de bandes diélectriques de longueurs distinctes, chaque portion de bande diélectrique déterminant une fréquence de résonance ; et
associer à chaque fréquence de résonance une partie de l'information.

## Patentansprüche

1. Ein chiploser RFID-Tag (31; 41; 51; 91), der ein Vielzahl von separaten, parallelen Leiterbahnen (35; 45; 55) aufweist, die auf einem dielektrischen Träger (33; 43; 53) ausgebildet sind, wobei leitende Brücken (38; 48; 58) benachbarte Leiterbahnen miteinander verbinden, wobei die leitenden Brücken zwischen den Leiterbahnen Abschnitte (39; 49; 59) dielektrischer Bahnen bzw. Streifen unterschiedlicher Längen abgrenzen, wobei jeder Abschnitt einer eines dielektrischen Streifens eine Resonanzfrequenz des Tags bestimmt, wobei alle Resonanzfrequenzen des Tags zusammen einen Identifikationscode definieren.

2. Tag (31; 51; 91) nach Anspruch 1, wobei ein dielektrischer Streifen (37b, 57b), der nicht durch eine leitende Brücke kurzgeschlossen wird, zwischen jedem Paar von benachbarten Leiterbahnen angeordnet ist, die miteinander durch eine leitende Brücke verbunden sind.

3. Tag (41) nach Anspruch 1, wobei alle benachbarten Leiterbahnen miteinander durch leitende Brücken verbunden sind.

4. Tag (41) nach Anspruch 3, wobei die Breite einer Leiterbahn (45b), die zwischen zwei benachbarten dielektrischen Streifen (47a, 47b) vorliegt, wenigstens die dreifache Breite der angrenzenden Leiterbahnen (45a, 45c) hat.

5. Tag (51) nach einem der Ansprüche 1 bis 4, wobei die Leiterbahnen in der Draufsicht U-förmig sind.

6. Tag (91) nach einem der Ansprüche 1 bis 4, wobei die Leiterbahnen in der Draufsicht die Form von Abschnitten von Kreisen haben.

7. Tag (101) nach einem der Ansprüche 1 bis 4, wobei die Leiterbahnen geradlinige Paare von benachbarten Bahnen (105a, 105b) sind, die dieselbe Länge haben und wobei die Bahnen (105b, 105c) der unterschiedlichen Paare unterschiedliche Längen haben.

8. Tag (31; 41; 51; 91) nach einem der Ansprüche 1 bis 7, wobei die Abschnitte der dielektrischen Streifen alle dieselbe Breite haben.

9. Ein Verfahren zum Codieren von Daten, die von einem Transceiver für elektromagnetische Wellen lesbar sind, das die folgenden Schritte aufweist:
Bilden einer Vielzahl von separaten parallelen Leiterbahnen auf einem dielektrischen Träger;
Bilden leitender Brücken, die benachbarte Leiterbahnen miteinander verbinden, so dass die leitenden Brücken zwischen den Leiterbahnen Abschnitte dielektrischer Bahnen bzw. Streifen unterschiedlicher Längen abgrenzen,
wobei jeder Abschnitt eines dielektrischen Streifens eine Resonanzfrequenz bestimmt; und
Assoziieren eines Teils der Daten mit jeder Resonanzfrequenz.

## Claims

1. A chipless RFID tag (31; 41; 51; 91) comprising a plurality of separate parallel conductive strips (35; 45; 55) formed on a dielectric support (33; 43; 53), wherein conductive bridges (38; 48; 58) interconnect neighboring conductive strips, the conductive bridges delimiting, between the conductive strips, dielectric strip portions (39; 49; 59) of different lengths, each dielectric strip portion determining a resonance frequency of the tag, the resonance frequencies of the tag altogether defining an identification code.

2. The tag (31; 51; 91) of claim 1, wherein a dielectric strip (37b; 57b) not shorted by a conductive bridge is arranged between each pair of neighboring conductive strips interconnected by a conductive bridge.

3. The tag (41) of claim 1, wherein all neighboring conductive strips are interconnected by conductive bridges.

4. The tag (41) of claim 3, wherein the width of a conductive strip (45b) comprised between two neighboring dielectric strips (47a, 47b) is at least equal to three times the width of the adjacent conductive strips (45a, 45c).

5. The tag (51) of any of claims 1 to 4, wherein the conductive strips are U-shaped in top view.

6. The tag (91) of any of claims 1 to 4, wherein the conductive strips have the shape of portions of circles in top view.

7. The tag (101) of any of claims 1 to 4, wherein the conductive strips are rectilinear, pairs of neighboring strips (105a, 105b) having the same length and strips (105b, 105c) of different pairs having different lengths.

8. The tag (31; 41; 51; 91) of any of claims 1 to 7, wherein the dielectric strip portions all have the same width.

9. A method for coding data readable by an electromagnetic wave transceiver, comprising the steps of:
forming a plurality of separate parallel conductive strips on a dielectric support;
forming conductive bridges interconnecting neighboring conductive strips, so that the conductive bridges delimit, between the conductive strips, dielectric strip portions of different lengths, each dielectric strip portion determining a resonance frequency; and
associating with each resonance frequency a portion of the data.
